# EUROPÄISCHE PATENTSCHRIFT

(11) **EP 3 514 085 B1**
(45) Veröffentlichungstag und Bekanntmachung des Hinweises auf die Patenterteilung: **08.11.2023**
(21) Anmeldenummer: 18152394.5
(22) Anmeldetag: 18.01.2018
(51) Int. Cl.: B65G 43/08, B65G 47/68, B65G 47/51

(54) **TRANSPORT- UND ZUFÜHREINHEIT FÜR VORFORMLINGE**
TRANSPORT AND SUPPLY UNIT FOR PREFORMS
UNITÉ DE TRANSPORT ET D'ALIMENTATION POUR PRÉFORMÉS

(43) Veröffentlichungstag der Anmeldung: 24.07.2019
(73) Patentinhaber: M. Tanner AG, 8406 Winterthur (CH)
(72) Erfinder: Tanner, Marcel, 8303 Bassersdorf (CH)
(74) Vertreter: Schaad, Balass, Menzl & Partner AG

(56) Entgegenhaltungen:
- EP-A1- 1 647 506
- WO-A1-2015/140451
- DE-A1- 3 340 088
- DE-A1- 19 530 626
- DE-A1-102013 106 926
- US-A- 2 237 345
- US-A- 5 170 879
- US-B2- 7 510 363

## Beschreibung

Die Erfindung betrifft eine Transport- und Zuführeinheit für Vorformlinge, insbesondere für PET-Flaschen, wobei die Transport- und Zuführeinheit an ihrem stromaufwärtigen Ende mit Vorformlingen beschickbar ist und die Vorformlinge einer am stromabwärtigen Ende der Transportund Zuführeinheit angeordneten Fördereinheit zuführt.

Aus der DE 195 30 626 A1 ist eine Vorrichtung zum Erfassen der Belegung eines Förderer für Gefässe, insbesondere Flaschen oder Dosen, bekannt, mit einem Stau- und/oder Umlenkbereich, wobei die Belegung oder Befüllung des Förderers mit Gefässen berührungslos durch eine im wesentlichen parallel zur Förderebene erfolgende Messung des Abstandes zwischen einem an einem stauaufwärtsliegenden Bezugsort angeordneten Sensor und den hintersten Gefässen des gestauten Flaschenstroms erfasst wird.

Aus der DE 203 08 513 U1 ist eine Vorrichtung zum Zuführen von Vorformlingen bzw. Preforms aus thermoplastischem Kunststoff mit einem Tragring im Bereich des offenen Endes zu einer Blasmaschine zum Herstellen von Hohlkörpern bekannt, mit einem bodennah aufgestellten Silo zur ungeordneten Aufnahme mehrerer Vorformlinge, einem die Vorformlinge in eine mit dem offenen Ende nach oben weisende Position ausrichtenden und zu einer Einzelreihe formierenden Rollensortierer, einem die Vorformlinge ungeordnet vom Silo zum Rollensortierer bewegenden Schrägförderer und mit einer abwärts geneigten, unter den Tragringen angreifende Tragschienen aufweisenden Rutsche, die mehrere mit dem offenen Ende nach oben weisende Vorformlinge in einer Reihe aufnimmt und diese mittels Hangabtrieb der Blasmaschine zuführt, wobei der Rollensortierer bodennah aufgestellt ist und zwischen den Rollensortierer und das erhöhte obere Ende der Rutsche ein die Vorformlinge anhebender Höhenförderer eingeschaltet ist. Bei dieser Vorrichtung wird das Silo von oben her, mittels einer entsprechenden Kippvorrichtung, durch Einschütten von in Kästen angelieferten Vorformlingen periodisch befüllt.

Nachteilig an dieser Lösung ist, dass die Vorformlinge durch den Schüttvorgang bzw. den Aufprall im Silo beschädigt bzw. verkratzt werden können und dass hierbei ein sehr hoher Lärmpegel erzeugt wird.

In der WO 2012/126129 A1 wird eine Vorrichtung zum Beschicken einer Förderanlage mit einer grossen Menge von Teilen, wie etwa Vorformlingen bzw. Preforms für Hohlkörper, beschrieben. Die Vorrichtung umfasst dabei eine Kippvorrichtung mit einem schwenkbaren Kipperteil und eine Vorrichtung zur Zwischenspeicherung der Teile, wobei die Vorrichtung zur Zwischenspeicherung ein Silo mit einer abhebbaren Abdeckung ist und die Kippvorrichtung ein mechanisches Verbindungs- und Kraftübertragungselement aufweist, welches mit der abhebbaren Abdeckung des Silos verbunden ist. Auch bei dieser Lösung kann es durch den Schüttvorgang zu Beschädigungen/Kratzern an den Vorformlingen kommen sowie zu einem erhöhten Lärmpegel.

In der EP 17189934.7 (am Anmeldetag der vorliegenden Anmeldung noch nicht publiziert) wird eine Transport- und Zuführeinheit für Vorformlinge, insbesondere für PET-Flaschen, angegeben, welche an ihrem stromaufwärtigen Ende mit Vorformlingen beschickbar ist und die Vorformlinge einer am stromabwärtigen Ende der Transport- und Zuführeinheit angeordneten Fördereinheit zuführt, wobei die Transport- und Zuführeinheit ein erstes Transportband und ein zweites Transportband aufweist, wobei am stromabwärtigen Ende des ersten Transportbandes eine trichterartige Vorrichtung vorgesehen ist, durch welche die Vorformlinge auf das zweite Transportband gelangen, welches die Vorformlinge der an seinem stromabwärtigen Ende angeordneten Fördereinheit zuführt.

Diese Lösung ist insbesondere für hohe Transportgeschwindigkeiten (d.h. bei über 50'000 Vorformlingen pro Stunde) geeignet. Allerdings ist sie relativ komplex und kostenaufwändig.

Es ist daher die Aufgabe der vorliegenden Erfindung, insbesondere für Anwendungen mit niedrigeren Transportgeschwindigkeiten eine weniger komplexe und kostengünstigere Lösung bereitzustellen, welche jedoch praktisch dieselben Vorteile bietet.

Diese Aufgabe wird erfindungsgemäss gelöst durch eine Transport- und Zuführeinheit für Vorformlinge, insbesondere für PET-Flaschen, wobei die Transport- und Zuführeinheit an ihrem stromaufwärtigen Ende mit Vorformlingen beschickbar ist und die Vorformlinge einer am stromabwärtigen Ende der Transport- und Zuführeinheit angeordneten Fördereinheit zuführt, wobei die Transportund Zuführeinheit ein erstes Transportband und ein zweites Transportband aufweist, wobei das zweite Transportband am stromabwärtigen Ende des ersten Transportbands angeordnet ist, wobei das erste Transportband die Vorformlinge dem zweiten Transportband zuführt, wobei das zweite Transportband die Vorformlinge der an seinem stromabwärtigen Ende angeordneten Fördereinheit zuführt und wobei im stromaufwärtigen Endbereich (d.h. im Einlauf) des zweiten Transportbands ein Distanzsensor angeordnet ist, und wobei weiter im stromaufwärtigen Endbereich des ersten Transportbands ein erster Sensor zum Detektieren von Vorformlingen angeordnet ist.

Die Fördereinheit ist vorliegend nicht Teil der beanspruchten Transport- und Zuführeinheit.

In einer bevorzugten Ausführungsform der vorliegenden Erfindung sind das erste Transportband und das zweite Transportband im rechten Winkel zueinander angeordnet. Auf diese Weise kann eine platzsparende Aufstellung erreicht werden.

In einer weiteren bevorzugten Ausführungsform der vorliegenden Erfindung ist am stromabwärtigen Ende des ersten Transportbands eine Schräge angeordnet, über welche die Vorformlinge auf das zweite Transportband rutschen. Die Schräge soll für einen möglichst reibungslosen Übergang der Vorformlinge vom ersten auf das zweite Transportband sowie für eine gute Verteilung der Vorformlinge auf dem zweiten Transportband sorgen. Die Schräge umfasst zudem eine Schmutzabscheidung, vorzugsweise in Form von Schlitzen, damit Dreck bzw. Verunreinigungen nicht auf das zweite Transportband gelangen können.

In einer weiteren bevorzugten Ausführungsform der vorliegenden Erfindung reicht die Schräge zumindest über die gesamte Breite des ersten Transportbands und weiter vorzugsweise etwa bis zur Mitte des zweiten Transportbands. Hierdurch wird einerseits eine gleichmässige Verteilung der Vorformlinge auf dem zweiten Transportband der Länge nach erreicht sowie vorzugsweise eine, optionale und variable, Verschmälerung bzw. Einengung des zweiten Transportbands. Der Distanzsensor kann diesbezüglich je nach Vorformlingsgrösse seitlich entlang der Rückwand des zweiten Transportbands versetzt werden.

Gemäß der vorliegenden Erfindung ist im stromaufwärtigen Endbereich des ersten Transportbands ein erster Sensor (vorzugsweise in Form einer Lichtschranke) angeordnet. Wenn der erste Sensor bzw. die erste Lichtschranke keine Vorformlinge mehr detektiert, fährt die Kippvorrichtung in ihre Ausgangs- bzw. Ladeposition zurück, um einen neuen Karton bzw. eine neue Charge mit Vorformlingen aufzunehmen.

In einer weiteren bevorzugten Ausführungsform der vorliegenden Erfindung ist zwischen dem ersten Sensor und dem stromabwärtigen Endbereich des ersten Transportbands ein zweiter Sensor (vorzugsweise in Form einer Lichtschranke) angeordnet. Wenn der zweite Sensor bzw. die zweite Lichtschranke keine Vorformlinge detektiert, kann die zur Beschickung des ersten Transportbands regelmässig vorgesehene Kippvorrichtung wieder in die Schüttposition fahren und eine neue Charge von Vorformlingen auf das Band kippen, ohne dass die Gefahr eines Rückstaus bzw. eines Zurückrollens von Vorformlingen gegeben ist. Das erste Transportband fährt hierbei grundsätzlich mit seiner normalen Transportgeschwindigkeit. Die Kippvorrichtung ist vorliegend nicht Teil der beanspruchten Transport- und Zuführeinheit.

In einer weiteren bevorzugten Ausführungsform der vorliegenden Erfindung ist im stromabwärtigen Endbereich des ersten Transportbands ein dritter Sensor (vorzugsweise in Form einer Lichtschranke) angeordnet. Wenn der dritte Sensor keine Vorformlinge in seinem Bereich detektiert, wird das erste Transportband angesteuert schneller zu fahren, um von hinten Vorformlinge nachzuliefern.

In einer weiteren bevorzugten Ausführungsform der vorliegenden Erfindung überwacht der (einstellbare) Distanzsensor, wann das zweite Transportband über die Breite des ersten Transportbands (ggf. auch bis etwa in Höhe des stromabwärtig gelegenen Endes der Schräge) frei von Vorformlingen ist. Solange dies nicht der Fall ist, werden vom ersten Transportband keine weiteren Vorformlinge an das zweite Transportband geliefert. D.h., wenn der dritte Sensor Vorformlinge in seinem Bereich detektiert und der Distanzsensor (noch) Vorformlinge im Bereich der Breite des ersten Transportbands (ggf. auch vor dem stromabwärtig gelegenen Ende der Schräge) auf dem zweiten Transportband detektiert, wird das erste Transportband gestoppt.

Erst wenn der Distanzsensor anzeigt, dass dieser Bereich frei von Vorformlingen ist (d.h. die Vorformlinge wurden in Transportrichtung am ersten Transportband bzw. am stromabwärtigen Ende der Schräge vorbeitransportiert), wird das erste Transportband wieder gestartet, um Vorformlinge nachzuliefern. Dies soll eine Haufenbildung verhindern bzw. dass nachrückende Vorformlinge auf die anderen Vorformlinge fallen und diese verkratzen und dabei zusätzlich Lärm erzeugen. Der Vorformlings-Teppich auf dem ersten Transportband wird also über die Geschwindigkeit gesteuert. Der Antrieb des ersten Transportbands umfasst insoweit einen Start-Stopp-Mechanismus.

In einer weiteren bevorzugten Ausführungsform der vorliegenden Erfindung ist im Bereich des stromabwärtig gelegenen Endes der Schräge ein weiterer Sensor angeordnet. Mit diesem Sensor kann die Geschwindigkeit des zweiten Transportbands geregelt werden. Wenn der Sensor frei ist (d.h. wenn er keine Vorformlinge in seinem Bereich detektiert) wird die Geschwindigkeit des zweiten Transportbands etwa über einen Frequenzumrichter erhöht.

Wenn der weitere Sensor belegt ist, wird die Geschwindigkeit des zweiten Transportbands herabgesetzt. Auf diese Weise kann eine optimal gleichmässige Regulierung der Vorformlingsmenge ohne Zeitverlust gewährleistet werden. Der weitere Sensor sollte vorzugsweise nahe der Übergabe zum Rucksacksilo montiert werden, damit bei einem Umschalten auf schnellen Betrieb keine Vorformlinge in das Rucksacksilo «eingeschossen» werden. Die Frequenzumrichter-Einstellung kann ggf. so gewählt werden, dass eine schnelle, langsame oder gleichbleibende Bandgeschwindigkeit möglich ist.

In einer weiteren bevorzugten Ausführungsform der vorliegenden Erfindung sind die Sensoren (d.h. ausser dem Distanzsensor) als Lichtschranken ausgebildet. Diese Form der Sensoren hat sich für die hier zugrundeliegende Anwendung als besonders zuverlässig und effizient erwiesen. Alle Sensoren sind im Übrigen mit einer üblichen Steuerung verbunden.

In einer weiteren bevorzugten Ausführungsform der vorliegenden Erfindung wird das erste Transportband über eine an seinem stromaufwärtigen Ende angeordnete Kippvorrichtung beschickt. Dies hat sich im Zusammenhang mit der beschriebenen Geschwindigkeits-Steuerung des ersten Transportbands als vorteilhaft erwiesen.

In einer weiteren bevorzugten Ausführungsform der vorliegenden Erfindung bringt das zweite Transportband die Vorformlinge in eine vorzugsweise als Rucksacksilo ausgebildete Puffervorrichtung, welche der Fördereinheit vorgeschaltet ist, ein. Diese Puffervorrichtung sorgt dafür, dass die Fördereinheit bzw. der Hochförderer weiter Vorformlinge an nachgeordnete Einheiten liefern kann, wenn auf dem zweiten (und ggf. auch dem ersten) Transportband eine entsprechend grosse Lücke entsteht.

Weiter vorzugsweise weist das Rucksacksilo bzw. die Puffervorrichtung jedenfalls einen Maximum-Sensor für den Füllstand mit Vorformlingen auf. Wird der Maximal-Füllstand erreicht, wird das zweite Transportband und ggf. auch das erste Transportband gestoppt. Das Rucksacksilo bzw. die Puffervorrichtung kann zudem auch noch einen Minimum-Sensor aufweisen. Wenn der minimale Füllstand erreicht wird, wird das zweite und ggf. auch das erste Transportband mit einer höheren Geschwindigkeit angesteuert.

In einer weiteren bevorzugten Ausführungsform der vorliegenden Erfindung ist das erste Transportband als Softband ausgebildet. Auf diese Weise werden Beschädigungen und/oder Kratzer der Vorformlinge beim Schütten auf das erste Transportband vermieden und es kann zusätzlich Lärm vermindert werden. Auch das zweite (Quer-) Transportband kann entsprechend als Softband ausgebildet sein.

In einer weiteren bevorzugten Ausführungsform der vorliegenden Erfindung weist das erste Transportband eine Länge zwischen 2000 mm und 3000 mm, vorzugsweise zwischen 2250 mm und 2750 mm, auf. Weiter vorzugsweise weist das erste Transportband eine Breite von 1500 mm bis 3500 mm, vorzugsweise von 2000 mm bis 3000 mm, auf.

In einer weiteren bevorzugten Ausführungsform der vorliegenden Erfindung weist das zweite Transportband eine Länge zwischen 2000 mm und 5000 mm, vorzugsweise zwischen 2500 mm und 4000 mm, auf. Weiter vorzugsweise weist das zweite Transportband eine Breite von 200 mm bis 1000 mm, vorzugsweise von 200 bis 500 mm, auf.

Durch die Verwendung der zuvor beschriebenen Sensoren bzw. dem entsprechenden Steuerungs-/Regelungsmechanismus kann insbesondere ein relativ kurzes erstes Transportband eingesetzt werden. Man braucht vor allem kein zusätzliches, sich an das erste Transportband anschliessendes, (Längs-) Transportband vorzusehen, um die Menge an Vorformlingen vor dem zweiten (Quer-) Transportband im Hinblick auf einen möglichst kontinuierlichen Betrieb ausreichend auseinanderzuziehen.

In den beigefügten Zeichnungen sollen lediglich zum Zwecke der Anschaulichkeit beispielhafte Ausführungsformen der vorliegenden Erfindung illustriert werden.

Es zeigt:
- Fig. 1: eine perspektivische Ansicht einer Anordnung bestehend aus einer erfindungsgemässen Transport- und Zuführeinheit mit einer vorgeschalteten Kippvorrichtung und einem nachgeschalteten Hochförderer;
- Fig. 2: eine Draufsicht auf die Anordnung mit der erfindungsgemässen Transport- und Zuführeinheit mit vorgeschalteter Kippvorrichtung und nachgeschaltetem Hochförderer gemäss Fig. 1;
- Fig. 3: eine Seitenansicht der Anordnung mit der erfindungsgemässen Transport- und Zuführeinheit mit vorgeschalteter Kippvorrichtung und nachgeschaltetem Hochförderer gemäss Fig. 1.

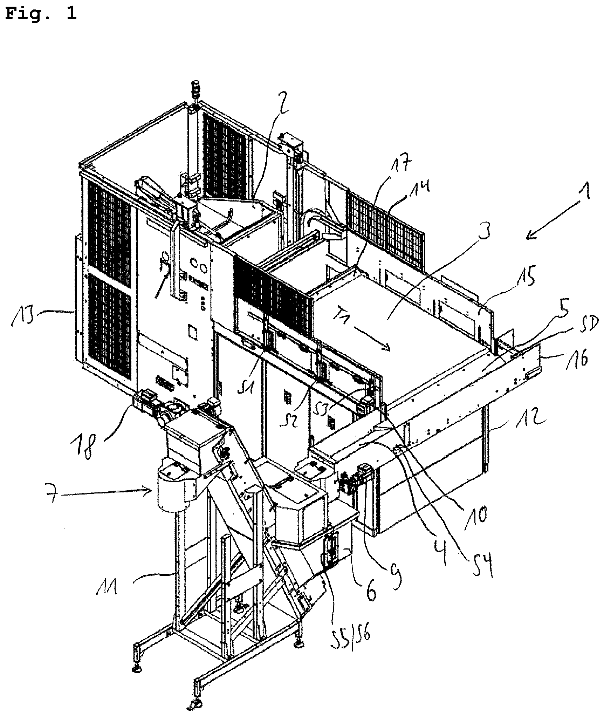

In **Fig. 1** wird eine Anordnung bestehend aus einer erfindungsgemässen Transport- und Zuführeinheit 1 mit vorgeschalteter Kippvorrichtung 2 und nachgeschaltetem Hochförderer 7 illustriert. Eine derartige Anordnung ist regelmässig Teil einer Förderanlage mit welcher Vorformlinge in eine Streckblasmaschine überführt werden.

Dabei wird zunächst die Kippvorrichtung 2 mit Vorformlingen beschickt (z.B. mit einem Karton voller Vorformlinge), welche anschliessend auf das erste Transportband 3 der erfindungsgemässen Transport- und Zuführeinheit 1 gekippt werden.

Das erste Transportband 3 bringt die Vorformlinge bis zu der Schräge 5, über welche die Vorformlinge auf das zweite Transportband 4 gelangen. Die Schräge 5 umfasst eine Schmutzabscheidung, vorzugsweise in Form von Schlitzen, damit Dreck bzw. Verunreinigungen nicht auf das zweite Transportband 4 gelangen können. Von dem zweiten Transportband 4 werden die Vorformlinge vorzugsweise in eine Puffervorrichtung, hier in Form eines Rucksacksilos 6, gebracht. Über das Rucksacksilo gelangen die Vorformlinge dann in die Fördereinheit bzw. den Hochförderer 7.

An den Hochförderer 7 schliesst sich üblicherweise ein Rollensortierer (nicht gezeigt) an, in welchem die Vorformlinge aufrecht gestellt werden. Über eine Ablaufschiene gelangen die Vorformlinge schliesslich in eine Streckblasmaschine (nicht gezeigt). Der Streckblasmaschine kann allerdings auch eine Inspektionsund Auswerfereinheit vorgeschaltet sein, in welcher die Vorformlinge vereinzelt sowie auf mögliche Beschädigungen geprüft und ggf. aussortiert werden.

Der Bereich der erfindungsgemässen Transport- und Zuführeinheit 1 mit den auf die Seitenwände 15 aufgesetzten Gitterteilen 14 sowie der Rücklaufsperre 17 am stromaufwärtigen Ende des ersten Transportbands 3 soll mit der Kippvorrichtung 2 dergestalt zusammenwirken, dass bei der Beschickung des ersten Transportbands 3 mit den Vorformlingen keine Vorformlinge seitlich herunterfallen oder an der Schnittstelle zwischen der Kippvorrichtung 2 und dem erstem Transportband 3 liegen bleiben bzw. zurückrollen. Die Kippvorrichtung 2 ist in einem Gestell 13 angeordnet und wird von einem Antrieb 18 angetrieben.

Die Fallhöhe der Vorformlinge von der Kippvorrichtung 2 auf das erste Transportband 3, welches regelmässig als Softband ausgebildet ist, beträgt bei der erfindungsgemässen Transport- und Zuführvorrichtung 1 bevorzugt weniger als 100 mm, so dass die Vorformlinge durch den Schüttvorgang keine Beschädigungen/Kratzer davontragen und der Lärmpegel niedrig gehalten werden kann.

Nach dem Schüttvorgang werden die Vorformlinge mittels des ersten Transportbands 3 in der Transportrichtung T1 zu der Schräge 5 gebracht. Das erste Transportband 3 wird dabei mittels eines Antriebs 10 angetrieben und von einem Gestell 12 getragen. Über dem ersten Transportband 3 können aus hygienischen Gründen auch Abdeckungen vorgesehen werden.

An der Schnittstelle zwischen dem ersten Transportband 3 und dem zweiten Transportband 4 ist eine Schräge 5 vorgesehen, welche dafür sorgt, dass die Vorformlinge möglichst reibungslos auf das zweite Transportband 4 gelangen.

Das zweite Transportband 4 bringt die Vorformlinge zu dem Rucksacksilo 6, welches dem Hochförderer 7 vorgeschaltet ist. Der Hochförderer wird von einem Gestell 11 getragen.

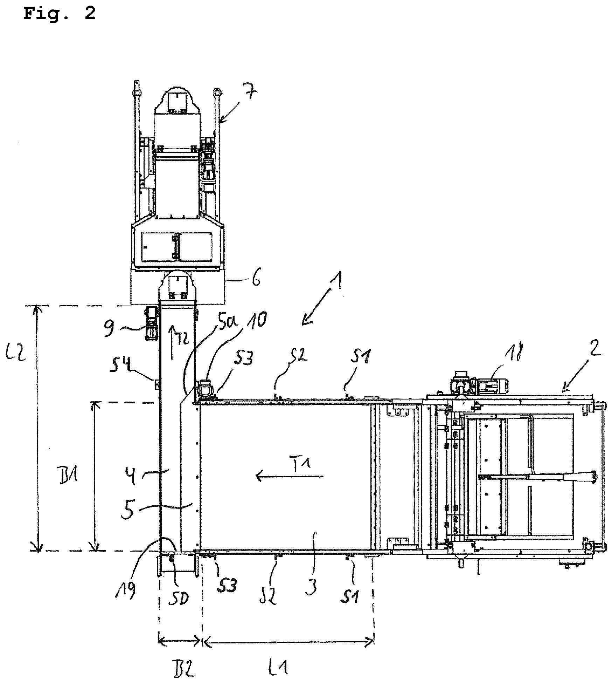

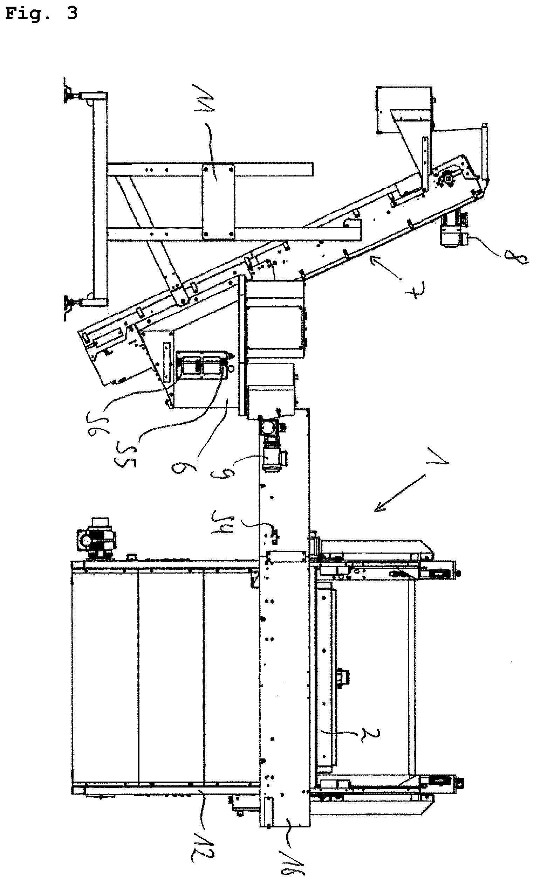

Anhand von **Fig. 2** **und** **3** wird nunmehr insbesondere die Anordnung der einzelnen Sensoren am ersten Transportband 3 (Sensoren S1, S2 und S3), am zweiten Transportband 4 (Sensoren SD und S4) sowie am Rucksacksilo 6 (Sensoren S5 und ggf. S6) beschrieben.

Wie zu sehen, ist der Sensor S1 im Anfangsbereich des ersten Transportbands 3 angeordnet, der Sensor S2 im mittleren Bereich des ersten Transportbands 3 und der Sensor S3 im Endbereich des ersten Transportbands 3 (d.h. jeweils oberhalb des ersten Transportbands 3 in der Seitenwand 15). Die Sensoren S1, S2 und S3 sind vorzugsweise als Lichtschranken ausgebildet und mit einer üblichen Steuerung (nicht gezeigt) verbunden.

Wenn der Sensor S1 feststellt, dass im Anfangsbereich des ersten Transportbands 3 keine Vorformlinge vorhanden sind, wird entsprechend die Kippvorrichtung 2 angesteuert in die Lade- bzw. Ausgangsposition zu fahren, um einen neuen Karton bzw. eine neue Charge mit Vorformlingen aufzunehmen.

Wenn der erste Sensor S1 (bzw. die erste Lichtschranke) keine Vorformlinge mehr in seinem Bereich detektiert, fährt die Kippvorrichtung 2 in ihre Ausgangs- bzw. Ladeposition zurück, um mit neuen Vorformlingen bestückt zu werden.

Zwischen dem ersten Sensor S1 und dem stromabwärtigen Endbereich des ersten Transportbands 3 ist ein zweiter Sensor S2 angeordnet. Wenn der zweite Sensor S2 (bzw. die zweite Lichtschranke) keine Vorformlinge in ihrem Bereich detektiert, wird die Kippvorrichtung 2 wieder in die Schüttposition gefahren und eine neue Charge von Vorformlingen wird auf das erste Transportband 3 gekippt, ohne dass die Gefahr eines Rückstaus bzw. eines Zurückrollens von Vorformlingen gegeben ist. Das erste Transportband 3 fährt hierbei grundsätzlich mit seiner normalen Transportgeschwindigkeit.

Des Weiteren ist im stromabwärtigen Endbereich des ersten Transportbands 3 ein dritter Sensor S3 angeordnet. Wenn der dritte Sensor keine Vorformlinge in seinem Bereich detektiert, wird das erste Transportband 3 angesteuert schneller zu fahren, um von hinten Vorformlinge nachzuliefern.

In der Rückwand 19 des zweiten Transportbands 4 ist (stirnseitig) der einstellbare Distanzsensor SD angeordnet. Der Distanzsensor SD tastet die Vorformlinge auf dem zweiten Transportband 4 ab und überwacht so, wann das zweite Transportband 4 über die Breite B1 des ersten Transportbands 3 (ggf. auch bis etwa in Höhe des stromabwärtig gelegenen Endes der Schräge 5, d.h. der seitlichen Abschrägung 5a) frei von Vorformlingen ist. Solange dies nicht der Fall ist, werden vom ersten Transportband 3 keine weiteren Vorformlinge an das zweite Transportband 4 geliefert.

Dies bedeutet, dass wenn der dritte Sensor S3 Vorformlinge in seinem Bereich detektiert und der Distanzsensor SD (noch) Vorformlinge in Transportrichtung T2 über die Breite B1 des ersten Transportbands 3 (ggf. auch vor dem stromabwärtig gelegenen Endes der Schräge 5) auf dem zweiten Transportband 4 detektiert, das erste Transportband 3 gestoppt wird.

Erst wenn der Distanzsensor SD anzeigt, dass der entsprechende Bereich frei von Vorformlingen ist, wird das erste Transportband 3 wieder gestartet, um Vorformlinge nachzuliefern.

Dies soll eine Haufenbildung verhindern bzw. dass nachrückende Vorformlinge auf die anderen Vorformlinge fallen und diese verkratzen und dabei zusätzlich Lärm erzeugen. Der Vorformlings-Teppich auf dem ersten Transportband 3 wird also über die Geschwindigkeit gesteuert. Der Antrieb 10 des ersten Transportbands umfasst insoweit einen Start-Stopp-Mechanismus.

Im Bereich des stromabwärtig gelegenen Endes der Schräge 5 ist bevorzugt ein weiterer Sensor S4 angeordnet. Mit dem Sensor S4 kann die Geschwindigkeit des zweiten Transportbands 4 geregelt werden. Wenn der Sensor S4 frei ist (d.h. wenn er keine Vorformlinge in seinem Bereich detektiert) wird die Geschwindigkeit des zweiten Transportbands 4 erhöht.

Wenn der Sensor S4 allerdings belegt ist (d.h. wenn er Vorformlinge in seinem Bereich detektiert), wird die Geschwindigkeit des zweiten Transportbands 4 herabgesetzt. Auf diese Weise kann eine optimal gleichmässige Regulierung der Vorformlingsmenge ohne Zeitverlust gewährleistet werden.

Der (weitere) Sensor S4 sollte vorzugsweise nahe der Übergabe zum Rucksacksilo 6 montiert werden, damit bei einem Umschalten auf schnellen Betrieb keine Vorformlinge in das Rucksacksilo 6 «eingeschossen» werden. Die Frequenzumrichter-Einstellung kann ggf. so gewählt werden, dass eine schnelle, langsame oder gleichbleibende Bandgeschwindigkeit möglich ist.

Wie weiterhin zu sehen, reicht die Schräge 5 zumindest über die gesamte Breite B1 des ersten Transportbands 3 und weiter vorzugsweise etwa bis zur Mitte bzw. bis zur Hälfte der Breite B2 des zweiten Transportbands 4. Hierdurch wird einerseits eine gleichmässige Verteilung der Vorformlinge auf dem zweiten Transportband 4 der Länge nach erreicht sowie vorzugsweise eine, optionale und variable, Verschmälerung bzw. Einengung des zweiten Transportbands 4. Der Distanzsensor SD kann diesbezüglich je nach Vorformlingsgrösse seitlich entlang der Rückwand 19 versetzt werden.

Die Rückwand 19 ist vorzugsweise umklappbar ausgestaltet, um ggf. bei einem reversierenden Betrieb des zweiten Transportbands 4 zum Entleeren desselben dienen zu können.

Die Schräge 5 weist in der Regel eine Länge auf, welche etwas grösser ist als die Breite B1 des ersten Transportbands 3, da die Schräge 5 an ihrem stromabwärtigen Ende noch eine seitliche Abschrägung 5a aufweist, von der die Vorformlinge T2 schräg nach vorne abrutschen, um eine flüssigere Bewegung des Vorformlingsteppichs auf dem zweiten Transportband 4 zu gewährleisten.

Die Länge L1 des ersten Transportbands 3 liegt zwischen 2000 mm und 3000 mm, vorzugsweise zwischen 2250 mm und 2750 mm. Die Breite B1 des ersten Transportbands 3 liegt zwischen 1500 mm und 3500 mm, vorzugsweise zwischen 2000 mm und 3000 mm.

Die Länge L2 des zweiten Transportbands 4 liegt zwischen 2000 mm und 5000 mm, vorzugsweise zwischen 2500 mm und 4000 mm. Die Breite B2 des zweiten Transportbands 4 liegt zwischen 200 mm und 1000 mm, vorzugsweise zwischen 200 und 500 mm.

In **Fig. 3** erkennt man nochmals in der Seitenansicht die Anordnung des Sensors S4 in der Seitenwand 16 des zweiten Transportbands 4 sowie die Anordnung des Maximum-Sensors S5 und des Minimum-Sensors S6 in der Seitenwand des Rucksacksilos 6.

Das Rucksacksilo 6 fungiert vorliegend als Puffervorrichtung und sorgt dafür, dass der Hochförderer 7 weiter Vorformlinge an nachgeordnete Einheiten liefern kann, wenn auf dem ersten bzw. zweiten Transportband eine entsprechend grosse Lücke entsteht.

Das Rucksacksilo 6 weist in diesem Zusammenhang zumindest einen Maximum-Sensor S5 für den Füllstand mit Vorformlingen auf. Wird der Maximal-Füllstand erreicht, wird das zweite Transportband 4 und ggf. auch das erste Transportband 3 gestoppt. Ist der Maximum-Sensor S5 frei, wird weitergefördert. Das Rucksacksilo 6 kann optional noch einen Minimum-Sensor S6 aufweisen. Wenn der minimale Füllstand erreicht wird, wird das zweite und ggf. auch das erste Transportband 3, 4 mit einer höheren Geschwindigkeit angesteuert, damit der Hochförderer 7 möglichst kontinuierlich mit Vorformlingen beliefert werden kann.

Aus der Fig. 3 erkennt man ausserdem noch die Anordnung des Antriebs 9 für das zweite Transportband 4 sowie des Antriebs 8 für den Hochförderer 7.

### Bezugszeichenliste:

- 1: Transport- und Zuführeinheit
- 2: Kippvorrichtung
- 3: erstes Transportband
- 4: zweites Transportband
- 5: Schräge
- 5a: seitliche Abschrägung
- 6: Rucksacksilo (bzw. Puffervorrichtung)
- 7: Hochförderer
- 8: Antrieb Hochförderer
- 9: Antrieb zweites Transportband
- 10: Antrieb erstes Transportband
- 11: Gestell Hochförderer
- 12: Gestell erstes Transportband
- 13: Gestell Kippvorrichtung
- 14: Seitengitter
- 15: Seitenwände (erstes Transportband)
- 16: Seitenwände (zweites Transportband)
- 17: Rücklaufsperre
- 18: Antrieb Kippvorrichtung
- 19: Rückwand zweites Transportband (umklappbar)
- L1: Länge erstes Transportband
- B1: Breite erstes Transportband
- L2: Länge zweites Transportband
- B2: Breite zweites Transportband
- S1: Sensor erstes Transportband (Anfangsbereich)
- S2: Sensor erstes Transportband (mittlerer Bereich)
- S3: Sensor erstes Transportband (Endbereich)
- S4: (weiterer) Sensor zweites Transportband
- S5: Maximum-Sensor Rucksacksilo
- S6: Minimum-Sensor Rucksacksilo (optional)
- SD: Distanzsensor
- T1: Transportrichtung erstes Transportband
- T2: Transportrichtung zweites Transportband

## Patentansprüche

1. Transport- und Zuführeinheit für Vorformlinge, insbesondere für PET-Flaschen, wobei die Transportund Zuführeinheit (1) an ihrem stromaufwärtigen Ende mit Vorformlingen beschickbar ist und die Vorformlinge einer am stromabwärtigen Ende der Transport- und Zuführeinheit (1) angeordneten Fördereinheit (7) zuführt, wobei die Transport- und Zuführeinheit (1) ein erstes Transportband (3) und ein zweites Transportband (4) aufweist,
wobei das zweite Transportband (4) am stromabwärtigen Ende des ersten Transportbands (3) angeordnet ist, wobei das erste Transportband (3) die Vorformlinge dem zweiten Transportband (4) zuführt, wobei das zweite Transportband (4) die Vorformlinge der an seinem stromabwärtigen Ende angeordneten Fördereinheit (7) zuführt und wobei im stromaufwärtigen Endbereich des zweiten Transportbands (4) ein Distanzsensor (SD) angeordnet ist, **dadurch gekennzeichnet dass** im stromaufwärtigen Endbereich des ersten Transportbands (3) ein erster Sensor (S1) zum Detektieren von Vorformlingen angeordnet
ist.

2. Transport- und Zuführeinheit nach Anspruch 1, **dadurch gekennzeichnet, dass** das erste Transportband (3) und das zweite Transportband (4) im rechten Winkel zueinander angeordnet sind.

3. Transport- und Zuführeinheit nach Anspruch 1 oder 2, **dadurch gekennzeichnet, dass** am stromabwärtigen Ende des ersten Transportbands (3) eine Schräge (5) angeordnet ist, über welche die Vorformlinge auf das zweite Transportband (4) rutschen.

4. Transport- und Zuführeinheit nach Anspruch 3, **dadurch gekennzeichnet, dass** die Schräge (5) zumindest über die gesamte Breite (B) des ersten Transportbands (3) und vorzugsweise etwa bis zur Mitte des zweiten Transportbands (4) reicht.

5. Transport- und Zuführeinheit nach einem der vorhergehenden Ansprüche, **dadurch gekennzeichnet, dass** zwischen dem ersten Sensor (S1) und dem stromabwärtigen Endbereich des ersten Transportbands (3) ein zweiter Sensor (S2) zum Detektieren von Vorformlingen angeordnet ist.

6. Transport- und Zuführeinheit nach einem der vorhergehenden Ansprüche, **dadurch gekennzeichnet, dass** im stromabwärtigen Endbereich des ersten Transportbands (3) ein dritter Sensor (S3) zum Detektieren von Vorformlingen angeordnet ist.

7. Transport- und Zuführeinheit nach einem der vorhergehenden Ansprüche, **dadurch gekennzeichnet, dass** der Distanzsensor (SD) überwacht, wann das zweite Transportband (4) über die Breite (B1) des ersten Transportbands (3) frei von Vorformlingen ist.

8. Transport- und Zuführeinheit nach Anspruch 3 oder einem der vorhergehenden Ansprüche und Anspruch 3, **dadurch gekennzeichnet, dass** im Bereich des stromabwärtig gelegenen Endes der Schräge (5) ein weiterer Sensor (S4) angeordnet ist.

9. Transport- und Zuführeinheit nach einem der vorhergehenden Ansprüche, **dadurch gekennzeichnet, dass** die Sensoren (S1, S2, S3, S4, S5) als Lichtschranken ausgebildet sind.

10. Transport- und Zuführeinheit nach einem der vorhergehenden Ansprüche, **dadurch gekennzeichnet, dass** das erste Transportband (3) über eine an seinem stromaufwärtigen Ende angeordnete Kippvorrichtung (2) beschickbar ist.

11. Transport- und Zuführeinheit nach einem der vorhergehenden Ansprüche, **dadurch gekennzeichnet, dass** das zweite Transportband (4) eingerichtet ist, die Vorformlinge in eine vorzugsweise als Rucksacksilo ausgebildete Puffervorrichtung (6), welche der Fördereinheit (7) vorgeschaltet ist, einzubringen.

12. Transport- und Zuführeinheit nach einem der vorhergehenden Ansprüche, **dadurch gekennzeichnet, dass** das erste Transportband (3) als Softband ausgebildet ist.

13. Transport- und Zuführeinheit nach einem der vorhergehenden Ansprüche, **dadurch gekennzeichnet, dass** das zweite Transportband (4) als Softband ausgebildet ist.

14. Transport- und Zuführeinheit nach einem der vorhergehenden Ansprüche, **dadurch gekennzeichnet, dass** das erste Transportband (3) eine Länge (L1) zwischen 2000 mm und 3000 mm, vorzugsweise zwischen 2250 mm und 2750 mm aufweist.

## Claims

1. Transfer and feed unit for preforms, in particular for PET bottles, wherein the transfer and feed unit (1) can be loaded with preforms at the upstream end thereof and feeds the preforms to a conveying unit (7) arranged at the downstream end of the transfer and feed unit (1), wherein the transfer and feed unit (1) has a first conveyor belt (3) and a second conveyor belt (4), wherein the second conveyor belt (4) is arranged at the downstream end of the first conveyor belt (3), wherein the first conveyor belt (3) feeds the preforms to the second conveyor belt (4), wherein the second conveyor belt (4) feeds the preforms to the conveying unit (7) arranged at the downstream end thereof and wherein a distance sensor (SD) is arranged in the upstream end region of the second conveyor belt (4), **characterized in that** a first sensor (S1) for detecting preforms is arranged in the upstream end region of the first conveyor belt (3) .

2. The transfer and feed unit as claimed in claim 1, **characterized in that** the first conveyor belt (3) and the second conveyor belt (4) are arranged at a right angle to one another.

3. The transfer and feed unit as claimed in claim 1 or 2, **characterized in that** a slope (5), via which the preforms slide onto the second conveyor belt (4), is arranged at the downstream end of the first conveyor belt (3).

4. The transfer and feed unit as claimed in claim 3, **characterized in that** the slope (5) extends at least over the entire width (B) of the first conveyor belt (3) and preferably approximately as far as the center of the second conveyor belt (4).

5. The transfer and feed unit as claimed in one of the preceding claims, **characterized in that** a second sensor (S2) for detecting preforms is arranged between the first sensor (S1) and the downstream end region of the first conveyor belt (3).

6. The transfer and feed unit as claimed in one of the preceding claims, **characterized in that** a third sensor (S3) for detecting preforms is arranged in the downstream end region of the first conveyor belt (3).

7. The transfer and feed unit as claimed in one of the preceding claims, **characterized in that** the distance sensor (SD) monitors when the second conveyor belt (4) is free from preforms across the width (B1) of the first conveyor belt (3).

8. The transfer and feed unit as claimed in claim 3 or in one of the preceding claims and claim 3, **characterized in that** a further sensor (S4) is arranged in the region of the downstream end of the slope (5).

9. The transfer and feed unit as claimed in one of the preceding claims, **characterized in that** the sensors (S1, S2, S3, S4, S5) are designed as light barriers.

10. The transfer and feed unit as claimed in one of the preceding claims, **characterized in that** the first conveyor belt (3) can be loaded by means of a tipping device (2) arranged at the upstream end thereof.

11. The transfer and feed unit as claimed in one of the preceding claims, **characterized in that** the second conveyor belt (4) is configured to introduce the preforms into a buffer device (6) preferably designed as a rucksack silo, which is arranged in front of the conveying unit (7).

12. The transfer and feed unit as claimed in one of the preceding claims, **characterized in that** the first conveyor belt (3) is designed as a soft belt.

13. The transfer and feed unit as claimed in one of the preceding claims, **characterized in that** the second conveyor belt (4) is designed as a soft belt.

14. The transfer and feed unit as claimed in one of the preceding claims, **characterized in that** the first conveyor belt (3) has a length (L1) of between 2000 mm and 3000 mm, preferably between 2250 mm and 2750 mm.

## Revendications

1. Unité de transport et d'alimentation pour des préformés, en particulier pour des bouteilles en PET, l'unité de transport et d'alimentation (1) pouvant être alimentée en préformés à son extrémité amont et amenant les préformés à une unité de transport (7) disposée à l'extrémité aval de l'unité de transport et d'alimentation (1), l'unité de transport et d'alimentation (1) présentant une première bande transporteuse (3) et une deuxième bande transporteuse (4), la deuxième bande transporteuse (4) étant disposée à l'extrémité aval de la première bande transporteuse (3), la première bande transporteuse (3) amenant les préformés à la deuxième bande transporteuse (4), la deuxième bande transporteuse (4) amenant les préformés à l'unité de transport (7) disposée à son extrémité aval et un capteur de distance (SD) étant disposé dans la zone d'extrémité amont de la deuxième bande transporteuse (4), **caractérisé en ce qu'**un premier capteur (S1) destiné à détecter les préformés est disposé dans la zone d'extrémité amont de la première bande transporteuse (3) .

2. Unité de transport et d'alimentation selon la revendication 1, **caractérisée en ce que** la première bande transporteuse (3) et la deuxième bande transporteuse (4) sont disposées à angle droit l'une par rapport à l'autre.

3. Unité de transport et d'alimentation selon la revendication 1 ou 2, **caractérisée en ce qu'**à l'extrémité aval de la première bande transporteuse (3) est disposé un biseau (5) par lequel les préformés glissent sur la deuxième bande transporteuse (4).

4. Unité de transport et d'alimentation selon la revendication 3, **caractérisée en ce que** le biseau (5) s'étend au moins sur toute la largeur (B) de la première bande transporteuse (3) et de préférence à peu près jusqu'au milieu de la deuxième bande transporteuse (4).

5. Unité de transport et d'alimentation selon l'une des revendications précédentes, **caractérisée en ce qu'**un deuxième capteur (S2) destiné à détecter les préformés est disposé entre le premier capteur (S1) et la zone d'extrémité aval de la première bande transporteuse (3).

6. Unité de transport et d'alimentation selon l'une des revendications précédentes, **caractérisée en ce qu'**un troisième capteur (S3) destiné à détecter des préformés est disposé dans la zone d'extrémité aval de la première bande transporteuse (3).

7. Unité de transport et d'alimentation selon l'une des revendications précédentes, **caractérisée en ce que** le capteur de distance (SD) surveille le moment où la deuxième bande transporteuse (4) est exempte de préformés sur la largeur (B1) de la première bande transporteuse (3).

8. Unité de transport et d'alimentation selon la revendication 3 ou l'une des revendications précédentes et la revendication 3, **caractérisée en ce qu'**un autre capteur (S4) est disposé dans la zone de l'extrémité aval du biseau (5).

9. Unité de transport et d'alimentation selon l'une des revendications précédentes, **caractérisée en ce que** les capteurs (S1, S2, S3, S4, S5) sont des cellules photoélectriques.

10. Unité de transport et d'alimentation selon l'une des revendications précédentes, **caractérisée en ce que** la première bande transporteuse (3) peut être chargée par un dispositif de basculement (2) disposé à son extrémité amont.

11. Unité de transport et d'alimentation selon l'une des revendications précédentes, **caractérisée en ce que** la deuxième bande transporteuse (4) est agencée pour introduire les préformés dans un dispositif tampon (6), de préférence conçu comme un silo à sac à dos, qui est placé en amont de l'unité de transport (7).

12. Unité de transport et d'alimentation selon l'une des revendications précédentes, **caractérisée en ce que** la première bande transporteuse (3) est conçue comme une bande souple.

13. Unité de transport et d'alimentation selon l'une des revendications précédentes, **caractérisée en ce que** la deuxième bande transporteuse (4) est conçue comme une bande souple.

14. Unité de transport et d'alimentation selon l'une des revendications précédentes, **caractérisée en ce que** la première bande transporteuse (3) présente une longueur (L1) comprise entre 2000 mm et 3000 mm, de préférence entre 2250 mm et 2750 mm.
